# EUROPÄISCHE PATENTANMELDUNG

(11) **EP 1 657 020 A1**
(43) Veröffentlichungstag der Anmeldung: **17.05.2006**
(21) Anmeldenummer: 04405689.3
(22) Anmeldetag: 10.11.2004
(51) Int. Cl.: B23K 26/14, B26F 1/31, B26F 3/00, B23K 26/42, B23K 26/06

(54) **Verfahren und Vorrichtung zur Optimierung der Kohärenz eines Flüssigkeitsstrahls für eine Materialbearbeitung und Flüssigkeitsdüse für eine solche Vorrichtung**

(71) Anmelder: SYNOVA S.A., 1024 Ecublens (CH)
(72) Erfinder: Richerzhagen, Bernold, 1025 Saint-Sulpice (CH); Spiegel, Akos, 1022 Chavannes (CH)
(74) Vertreter: Roshardt, Werner Alfred

(57) **Zusammenfassung**

Bei dem Verfahren wird zur Stabilisierung eines mit einer Flüssigkeitsdüse (1) erzeugten Flüssigkeitsstrahls (5) als Strahlleiter für eine Bearbeitung eines Werkstücks (3) mit einem den Flüssigkeitsstrahl (5) mantelseitig umgebenden Beaufschlagungsgas (35) gearbeitet. Der Flüssigkeitsstrahl (5) wird durch eine, entfernt von der Flüssigkeitsdüse (1), einen Beaufschlagungsgasstrahl formende Gasauslassdüse (23) derart hindurchgeführt, dass eine erste Achse des Flüssigkeitsstrahls und eine zweite Achse des gebildeten Gasstrahls bis auf eine Toleranz zusammenfallen. Vorzugsweise wird das Beaufschlagungsgas erst nach einem vorgegebenen Weg von der Flüssigkeitsdüse (1) entfernt strömungsmässig nachgeschaltet zugeführt.

Eine Vorrichtung zur Stabilisierung des Flüssigkeitsstrahls (5) hat eine diesen erzeugenden Düse (1) wenigstens einen Gaseinlass (25a,25b,25d) für das Beaufschlagungsgas und einen Auslass (23) für den beaufschlagten Flüssigkeitsstrahl (5).

Eine Flüssigkeitsdüse (1) der Vorrichtung (7) hat einen einen Flüssigkeitsstrahl (5) erzeugenden Düsenkanal (11) mit einem scharfkantigen Übergang von einer Düsenoberfläche am Düseneingang in den Düsenkanal (11), wobei der scharfkantige Übergang einen Radius kleiner 10 Mikrometer, vorzugsweise kleiner 2 Mikrometer hat.

## Beschreibung

### Technisches Gebiet

Die Erfindung betrifft ein Verfahren zur Formung eines mit einer Strahldüse erzeugten Flüssigkeitsstrahls gemäss dem Oberbegriff des Patentanspruchs 1, eine Vorrichtung hierzu gemäss dem Oberbegriff des Patentanspruchs 7 sowie eine Düse für die Vorrichtung gemäss dem Oberbegriff des Patentanspruchs 11.

### Stand der Technik

In der DE 101 13 475 A1 sind ein Verfahren und eine Vorrichtung zur Verlängerung des kohärenten Bereichs eines Flüssigkeitsstrahls beschrieben. Die Vorrichtung hatte eine Düsenanordnung, in der eine den Flüssigkeitsstrahl erzeugende Düse in einem topfartigen Behälter angeordnet war. Der Düse gegenüberliegend war ein mit dem Flüssigkeitsstrahl zu bearbeitendes Werkstück angeordnet. Der Behälter konnte nun allseitig um die Düse und das Werkstück geschlossen oder als in Richtung auf das Werkstück offener Behälter ausgebildet sein.

Wurde ein allseitig geschlossener Behälter verwendet, so wurde dessen Innendruck mit einer Vakuumpumpe gegenüber dem Umgebungsdruck reduziert. Ziel der DE 101 13 475 war es, eine Strahlausbreitung möglichst im Vakuum zu erreichen, was leider bei diversen technischen Anwendungen nicht möglich war. Es wurde deshalb vorgeschlagen, die Strahlumgebung mit einem Spülgas zu beschicken, dessen Zähigkeit bzw. Dichte kleiner als diejenige von Luft sein sollte; als Spülgase wurden Wasserstoff, Helium oder Methan genannt.

Um in einem Unterdruck arbeiten zu können, wurde ein allseitig geschlossener, mit einer Vakuumpumpe evakuierbarer Behälter verwendet, der die Flüssigkeitsdüse und das darunter liegende zu bearbeitende Werkstück enthielt. In diesen Behälter konnte neben der Düse das Spülgas eingelassen werden.

Die DE 101 13 475 schlug ferner vor, anstelle eines allseitig geschlossenen Behälters einen Behälter zu verwenden, dessen der Düse gegenüber liegende Behälterwand entfernt worden war. Die seitlichen Behälterwände konnten nun über das zu bearbeitende Werkstück herabgezogen werden, um einen mit Spülgas gefüllten, das Werkzeug enthaltenden Raum zu erzeugen.

Der nach unten offene Behälter konnte nun auch derart ausgebildet werden, dass die den Flüssigkeitsstrahl formende Düse im den Behälterraum hineinversetzt wurde und das Spülgas durch eine der offenen Behälterseite gegenüberliegende Rückwand strömungsmässig gegenüber der Flüssigkeitsdüse zurückversetzt eingelassen wurde.

In der US-A 4,047,580 wurde im Gegensatz zur DE 101 13 475 kein topfartiger Behälter verwendet, der evakuiert oder mit einem Spülgas beschickt wurde, sondern eine Flüssigkeitsdüse, um deren Düsenöffnung herum eine Gasaustrittsdüse angeordnet war. Bei dieser Düse lagen der Austritt des Gas- und des Flüssigkeitsstrahls in einer Ebene. Als Spülgas wurde Luft verwendet, wobei die Laufaustrittsgeschwindigkeit aus der Luftdüse wenigstens die halbe Luftschallgeschwindigkeit haben sollte.

In der JP 2000-334590 ist eine Erzeugung eines Flüssigkeitsstrahls mit einer Düse beschrieben. In die Düsenmitte wurde die Strahlung eines Laserstrahls zur Einkopplung in den Flüssigkeitsstrahl fokussiert. Um die Flüssigkeitsdüse war, analog zur US-A 4,047,580, ein ringförmiger Gasauslass angeordnet, der den Flüssigkeitsstrahl ummanteln sollte. Als Gas wurde ein Inertgas, Stickstoff, Argon, Sauerstoff oder Luft verwendet.

### Darstellung der Erfindung

### Aufgabe

Aufgabe der Erfindung ist es, ein Verfahren zur Erzeugung eines Flüssigkeitsstrahl aufzuzeigen und eine hierzu verwendbare Vorrichtung zu schaffen, bei dem bzw. bei der eine gegenüber dem Stand der Technik optimierte Kohärenz der Strahllänge des Flüssigkeitsstrahls erreichbar ist.

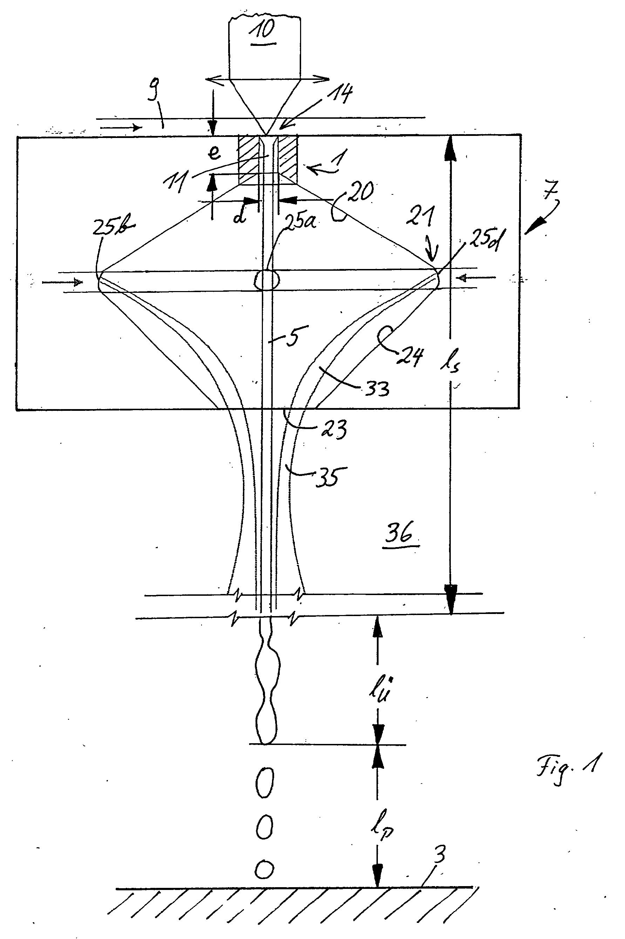

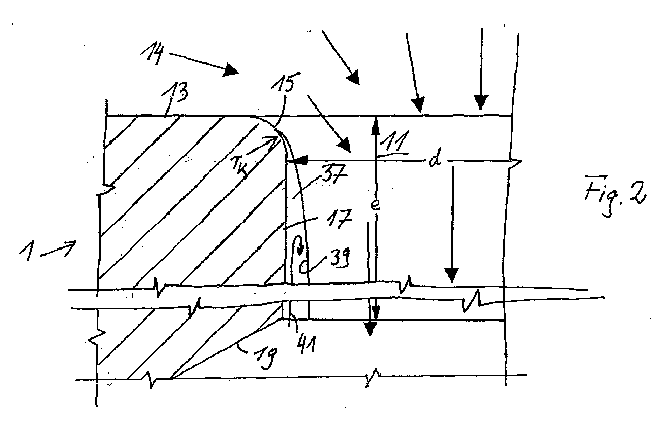

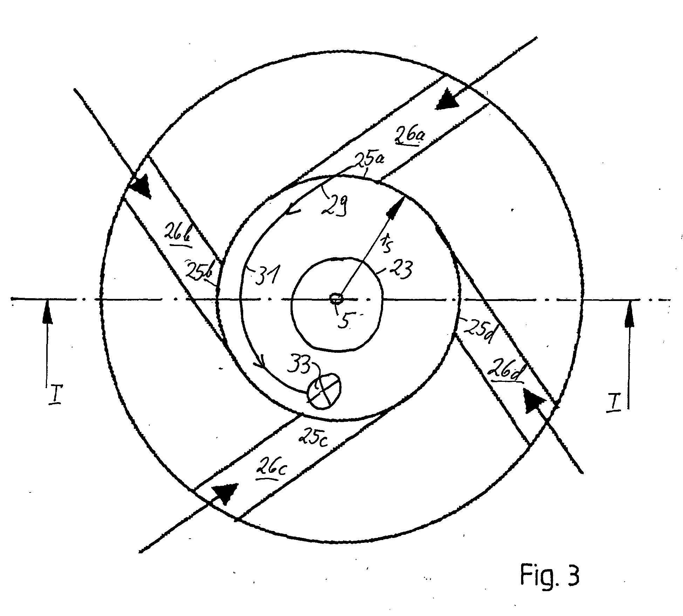

Nach einer einen Strahl erzeugenden Düse 1 hat jeder Flüssigkeitsstrahl, wie in Figur 1 angedeutet ist, eine stabile Strahllänge ℓₛ. An diesen "stabilen" (kohärenten) Bereich schliesst ein Bereich mit einer Länge ℓ_{Ü} an, in der der Strahlmantel beginnt sich einzuschnüren. Diesen "Einschnürbereich" bezeichnet man als Übergangsbereich. Nach dem Übergangsbereich erfolgt ein Zerperlen des Strahls in einzelne Tropfen, welche über die Falllänge ℓ_{P} in leicht abgeflachte annähernd kugelförmige Tropfen übergehen. Die stabile Strahllänge ℓₛ ist bei einem frei auslaufenden Strahl länger als bei einem auf eine Werkstückoberfläche zur Materialbearbeitung auftreffenden Strahl.

Wird eine Materialbearbeitung mit einem "abrasiven" Hochdruck-Flüssigkeitsstrahl vorgenommen, so kann noch im Übergangsbereich, eventuell auch noch mit einem zerperlenden Flüssigkeitsstrahl, gearbeitet werden. Wird jedoch der Flüssigkeitsstrahl als Strahlleiter verwendet, in dem z.B. die Strahlung eines Laserstrahls eingekoppelt wird, um einen "kalten Schnitt" bzw. einen "kalten" Materialabtrag zu erhalten, wie beispielsweise in der WO 95/32834 und der WO99/56907 beschrieben, so beginnt in den Flüssigkeitsstrahl eingekoppelte Strahlung im Übergangsbereich seitlich aus dem Flüssigkeitsstrahl auszutreten. Diese bereits ausgetretene Strahlung ist für die Materialbearbeitung verloren.

Bei einer herkömmlichen Laserbearbeitung, bei der die Laserstrahlung auf die zu bearbeitende Werkstückoberfläche fokussiert wird, muss der Fokuspunkt einem Oberflächenprofil tiefenmässig nachgefahren werden. Bei in einen Flüssigkeitsstrahl eingekoppelter Laserstrahlung hingegen entfällt dieses tiefenmässige Nachstellen hier der Düse, sofern die Profilunterschiede kleiner sind als die stabile Strahllänge ℓₛ (minus Düsenabmessungen). Für eine optimale Materialbearbeitung mit einem in einen Flüssigkeitsstrahl eingekoppelten Laserstrahl sollte deshalb eine möglichst grosse stabile Flüssigkeitsstrahllänge erreicht werden.

### Lösung

Die Lösung der Aufgabe erfolgt verfahrensmässig durch die Merkmale des Patentanspruchs 1 und vorrichtungsmässig durch die Merkmale des Patentanspruchs 7, wobei die zu verwendende Vorrichtung vorzugsweise eine Flüssigkeitsdüse mit den Merkmalen des Patentanspruchs 11 enthält.

Um einen Flüssigkeitsstrahl, der als Strahlleiter für eine Laserstrahlung dient, mit einer möglichst langen stabilen Strahllänge ℓₛ zu erreichen, wird im Gegensatz zum Stand der Technik zuerst der Flüssigkeitsstrahl mit eingekoppelter Laserstrahlung erzeugt und dieser Flüssigkeitsstrahl dann durch eine Gasdüse geführt. Die Gasdüse formt einen den Flüssigkeitsstrahl umschlingenden Gasstrahl. Dies wird erreicht, indem die Strahlachse des Flüssigkeitsstrahls bis auf eine Toleranz mit der Düsenachse der Gasdüse zusammenfällt.

Bei einer Materialbearbeitung mit einem im Flüssigkeitsstrahl geführten Laserstrahl (z.B. die Strahlung eines Nd:YAG-Lasers mit einer Wellenlänge von 1,06 µm) hat der Flüssigkeitsstrahl typischerweise einen Durchmesser im Bereich von 30 µm bis 200 µm. Die Gasdüse hat einen Durchmesser von typischerweise 1 mm bis 2 mm. Als Richtwert sollte gelten: Der Durchmesser des Düsenkanals der Gasdüse sollte etwa zwanzigmal so gross sein wie der Durchmesser des Kanals der Flüssigkeitsdüse. Eine Toleranz für das Übereinstimmen der Gas- und der Flüssigkeitsstrahlachse im Gasdüsenbereich ist derart, dass der Flüssigkeitsstrahl durch die Mitte der Gasdüse mit einer Toleranz von ± 200 µm gehen sollte.

Im Gegensatz zum Stand der Technik werden lange stabile Strahllängen auch erreicht, wenn, wie oben ausgeführt, zuerst der Flüssigkeitsstrahl mit eingekoppelter Laserstrahlung gebildet wird und erst nach einem vorgegebenen Weg das Beaufschlagungsgas zugeführt wird. Im Stand der Technik wird das Beaufschlagungsgas immer in unmittelbarer Nähe zur Bildung des Flüssigkeitsstrahles zugeführt, wobei die Ausströmrichtungen der Flüssigkeit des Flüssigkeitsstrahls und diejenige des Beaufschlagungsgases parallel zueinander gewählt wurden.

Die Erfindung geht davon aus, dass die Gasbeaufschlagung derart erfolgen muss, dass am Ort der Gaseinströmung möglichst keine Störung des Flüssigkeitsstrahls erfolgen darf. Eine Störung auf den Flüssigkeitsstrahl wirkt sich nämlich bedeutend stärker auf eine Verkürzung der Strahllänge aus als eine erreichbare Verlängerung durch die Eigenschaften des Beaufschlagungsgases.

Vorzugsweise wird ein Beaufschlagungsgas in einem Hohlraum eines Gehäuses derart eingebracht, dass der eingebrachte Gasstrom den Flüssigkeitsstrahl nicht direkt trifft, der gesamte Hohlraum mit dem Beaufschlagungsgas füllbar ist und das Beaufschlagungsgas den Flüssigkeitsstrahl umhüllend das Gehäuse verlässt.

Vorzugsweise wird das Beaufschlagungsgas in einen Gehäuseinnenraum eingebracht. Bei dem Gehäuse ist dann einem als Gasdüse ausgebildeten Auslass gegenüberliegend die Flüssigkeitsdüse angeordnet. Wie unten noch ausführlich ausgeführt wird, ist dann der durch die Flüssigkeitsdüse erzeugte Flüssigkeitsstrahl sofort mit dem Beaufschlagungsgas umgeben.

Nicht jedes Gas ist gleich gut als Beaufschlagungsgas geeignet. Die kinematische Gasviskosität des verwendeten Beaufschlagungsgases sollte kleiner sein als diejenige des Atmosphärengases (= Umgebungsgas am Bearbeitungsort) . Sofern nicht unter einem Schutzgas gearbeitet wird, ist Luft das Atmosphärengas. Unter einer kinematischen Gasviskosität wird eine Viskosität bezogen auf das spezifische Gewicht des Gases verstanden. Die kinematische Gasviskosität von Luft beträgt bei 20°C und einem Druck von 1 atm 151,1 10⁻³ cm²/sec.

Gemäss American Institute of Physics Handbook, Second Edition, Seite 2-229 kämen somit beispielsweise die nachfolgenden Gase in Frage, wobei die angegebenen Werte die Dimension 10⁻³ cm²/sec haben:

| | |
|---|---|
| Wasserstoff (H₂) 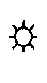 1,059 | Ethylen (C₂H₄) 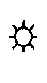 85,84 10⁻³ cm²/sec |
| Helium (He) 1,179 | Bromwasserstoff ^{*†} (HBr) 54,79 |
| Acetylen (C₂H₂) 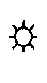 80,6 | Chlorwasserstoffgas HCℓ) ^{*†} 93,99 |
| Ammoniak (NH₃) ^{*†} 138 | Jodwasserstoff * (HJ) 34,42 |
| Argon (Ar) 134,3 | Kohlendioxid (CO₂) 80,9 |
| Bromgas *(Br₂) 22,50 | Krypton (Kr) 72,44 |
| iso-Butan (C₄H₁₀) 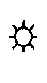 31,0 | Methylbromid (CH₃Br)* 33,64 |
| n-Butan (C₄H₁₀) 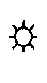 35,1 | Methylchlorid 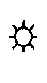 ^{†} (CH₃Cl) 50,97 |
| Chlor (Cℓ₂) *† 150,6 | Distickstoffoxid ^{*} 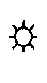 ^{†} (N₂O) 150,9 |
| Chloroform (CHCl₃) ^{*†}20,16 | Propan (C₃H₈) 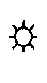 43,7 |
| Cyan (C₂N₂) ^{†}46,35 | Schwefeldioxidgas (SO₂) *^{†} 46,94 |
| Ethan(C₂H₆) 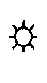 72,9 | Xenon (Xe) 42,69 |

Die mit * gekennzeichneten Gase sind, sofern als Flüssigkeitsstrahl ein Wasserstrahl verwendet wird, in diesem lösbar. Je nach Anwendung ist somit Vorsicht geboten. Die mit 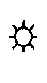 gekennzeichneten Gase sind brennbar und die mit ^{†} gekennzeichneten Gase sind giftig bzw. gesundheitsschädlich; auch bei einer Verwendung dieser Gase sollte man Vorsicht walten lassen. Gase ohne eine obige Kennzeichnung, wie beispielsweise Helium, Argon, Kohlendioxid, Krypton und Xenon können ohne Vorsichtsmassnahmen verwendet werden.

Damit durch eine Gasbeaufschlagung möglichst keine Beeinflussung des Flüssigkeitsstrahls am Ort des Gaseinlasses und dessen Umgebung erfolgen kann, wird das Gas in einem radialen Abstand von der Achse des Flüssigkeitsstrahls in einer geraden Strömungsrichtung, welche vom Flüssigkeitsstrahl weggerichtet ist, eingelassen. Diese erste Gasströmungsrichtung ist derart ausgelegt, dass die Strömung einen um den Flüssigkeitsstrahl zentrisch gelegten Kreis tangential berührt. Diese erste Strömungsrichtung wird dann in eine zweite Strömungsrichtung umgelenkt, welche um den Flüssigkeitsstrahl rotiert. Die Gaszuführung kann nun an einem einzigen Ort erfolgen. Vorzugsweise wird man jedoch mehrere von einander gleich distanzierte Zuführorte wählen, und die erste Gasströmungsrichtung unter ein und demselben Winkel ("tangentiale" Richtung) vornehmen, wodurch eine Rückwirkung auf den Flüssigkeitsstrahl aufgrund einer weitgehend homogenen Strömung des eingelassenen Gases reduziert wird. Von der Strahlachse aus haben dann jeweils zwei benachbarte Zuführorte den gleichen Zentriwinkel.

Fliesst der Flüssigkeitsstrahl vertikal, wie allgemein üblich, kann die erste Gaseinströmrichtung horizontal vorgenommen werden. Die erste Gaseinströmrichtung kann jedoch auch nach oben oder nach unten gerichtet sein. Nach oben wird man einen Winkel kleiner 30° und nach unten einen Winkel kleiner 70° wählen.

Wie oben ausgeführt, soll die erste Gasströmrichtung tangential an einen um den Flüssigkeitsstrahl d.h. und dessen Strahlachse zentrischen Kreis erfolgen. Liegt dieser Kreis in einer Ebene, welche von der Strahlachse senkrecht durchstossen wird, kann die erste Gasströmungsrichtung in dieser Ebene erfolgen oder gegenüber dieser Ebene nach oben (bis +30°) oder nach unten (-70°) gerichtet sein.

Vorzugsweise erfolgt der Gaseinlass wie gerade erwähnt "tangential"; es können aber auch hiervon abweichende Winkel gewählt werden. Es ist jedoch darauf zu achten, dass die Gaseinströmungsrichtung nie direkt auf den Flüssigkeitsstrahl gerichtet ist, damit dieser nicht gestört wird.

Die zweite, um den Flüssigkeitsstrahl rotierende Gasströmung wird anschliessend vorzugsweise in eine dritte Gasströmung des Flüssigkeitsstrahls umgelenkt. Die Umlenkung erfolgt aus einer ersten, annähernd ruhigen Gasbeaufschlagungsphase in eine rotierende Gasströmung mit in Fliessrichtung des Flüssigkeitsstrahls beschleunigter Gasströmung, wobei auch noch die Rotationsgeschwindigkeit erhöht werden kann. Ein derartiger "rotierender" Einlass, wobei diese Rotationsbewegung ziemlich schnell zum Erliegen kommt, ergibt, wie unten ausgeführt wird, eine grosse stabile Flüssigkeitsstrahllänge ℓₛ.

Um eine Gasummantelung eines Flüssigkeitsstrahls zu erreichen, welche eine grosse stabile Flüssigkeitsstrahllänge ℓₛ bewirkt, wird ein mit einer umlaufenden Wandung versehenes Gehäuse verwendet. In dem Gehäuse sind eine Flüssigkeitsdüse und wenigstens ein Gaseinlass angeordnet. Ferner ist eine Gasauslassdüse vorhanden, durch die der Flüssigkeitsstrahl derart hindurchführbar ist, dass eine erste Achse des Flüssigkeitsstrahls und eine zweite Achse des durch die Gasauslassdüse ausströmenden Gases bis auf eine oben angeführte Toleranz zusammenfallen.

Vorzugsweise wird man einen Gaseinlass, nicht wie es der Stand der Technik tut, am Ort der Flüssigkeitsdüse vornehmen, sondern der Flüssigkeitsdüse strömungstechnisch nachordnen.

Das Gehäuse wird man vorzugsweise als einen vertikal stehenden Doppelkegel mit einander gegenüberliegenden Kegelspitzen ausbilden. In der einen oberen Kegelspitze ist dann die Flüssigkeitsdüse angeordnet und in der gegenüberliegenden unteren Kegelspitze die Gasauslassdüse. Den Gaseinlass wird man vorzugsweise im Bereich des grössten Durchmessers des Doppelkegels vornehmen. Die trichterförmig nach unten zusammenlaufende Wandung erzeugt dann eine sich in der nach unten gerichteten Strömung erhöhende Strömungsgeschwindigkeit. Eine anfängliche Gasströmungsrotation durch die "tangentialen" Gaseinlässe kommt ziemlich schnell zum Erliegen, da der Wasserstrahl durch Reibung das Gas mitreisst. Diese Art des Gaseinlasses dient nur für eine möglichst homogene Gasbeaufschlagung des Flüssigkeitsstrahls und der Vermeidung einer Störung des Wasserstrahls.

Auf den ersten Blick verschenkt die hier beschriebene Vorrichtung stabile Strahllänge ℓₛ. Es wird nämlich zuerst der Flüssigkeitsstrahl erzeugt, dann wird in einem vorgegebenen Abstand ein Gaseinlass vorgenommen, und nach einem weiteren Weg verlässt der mit einem Gas in Flüssigkeitsströmungsrichtung beaufschlagte Flüssigkeitsstrahl die Vorrichtung. In diesen mit einer Gasströmung beaufschlagten Flüssigkeitsstrahl ist ein Laserstrahl für eine Materialbearbeitung eingekoppelt. Eine Materialbearbeitung kann jedoch erst nach Verlassen der Gasauslassdüse vorgenommen werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung der Ausführungsbeispiele verwendeten Zeichnungen zeigen in
- Fig. 1: eine schematische Darstellung einer Ausführungsvariante der erfindungsgemässen Vorrichtung,
- Fig. 2: einen Querschnitt durch eine vergrösserte Darstellung eines Düsenkanals einer Flüssigkeitsdüse der in Figur 1 dargestellten Vorrichtung und
- Fig. 3: einen Querschnitt durch die in Figur 1 dargestellt Vorrichtung entlang der dortigen Linie III - III,
- Fig. 4: eine stabile Strahllänge ℓₛ eines Flüssigkeitsstrahls in Luft im freien Auslauf (Kurven "- · - · " und "- - -") sowie unter einem Auftreffen auf eine Oberfläche (Kurve "----") und
- Fig. 5: eine zu Figur 4 analoge Darstellung, wobei jedoch der Flüssigkeitsstrahl mit Helium, analog der Erfindung beaufschlagt ist.

### Wege zur Ausführung der Erfindung

Die in **Figur 1** dargestellte Ausführungsvariante der erfindungsgemässen Vorrichtung zur Stabilisierung eines mit einer Flüssigkeitsdüse **1** erzeugten Flüssigkeitsstrahls **5** hat ein als sogenannter Nozzle ausgebildetes Gehäuse **7.** Die Flüssigkeitsdüse **1** ist als sogenannter Düsenstein ausgebildet. Auf die Zuführung der Flüssigkeit **9** für den Flüssigkeitsstrahl **5,** hier von Wasser, und die Einkopplung einer Laserstrahlung **10** in den Flüssigkeitsstrahl **5** wird nicht näher eingegangen. Derartiges ist ausführlich in der WO 95/32834 und der WO 99/56907 beschrieben.

Eine vergrösserte Darstellung eines Düsenkanals **11** der als Düsenstein ausgebildeten Flüssigkeitsdüse **1** zur Erzeugung des Flüssigkeitsstrahls **5** zeigt im Querschnitt **Figur 2.** Die Flüssigkeitsdüse **1** hat eine glatte Oberfläche **13** und ist vorzugsweise aus Diamant oder einem anderen harten Material gefertigt. Ein Radius r_{K} einer Lochkante **15** als Eingang in den Düsenkanal **11** wird so klein wie möglich gewählt, um so nahe wie möglich an einen theoretischen "scharfkantigen Einlass" zu kommen. Der Radius **r**_{**K**} sollte kleiner 10 µm sein und ist hier kleiner als 2 µm. Durch diesen scharfkantigen Einlass wird ein Flüssigkeitsstrahl mit einer bereits grossen stabilen Strahllänge ℓₛ erzeugt. Typische Durchmesser des Düsenkanals **11** liegen bei 30 µm bis 200 µm.

Der an den scharfkantigen Einlass **15** anschliessende zylindrische Teil des Düsenkanals **11** wird so kurz wie möglich gehalten und liegt in der Grössenordnung kleiner als fünf Mal Durchmesser **d** des Düsenkanals **11;** hier ist er drei Mal kleiner. Durch eine derartige Ausgestaltung löst sich die Strömung des Flüssigkeitsstrahls 5 bereits an der Lochkante **15** von der Düsenkanalinnenwand **17** ab. Ein zu langer Düsenkanal **11** würde zu Verwirbelungen eines Gases zwischen der Düsenkanalinnenwand **17** und dem Flüssigkeitsstrahl **5** führen. Kleinste auf den Flüssigkeitsstrahl einwirkende Störungen führen zu einem Zerwellen (Strahlbereich ℓ_{Ü}) und somit zu einer verkürzten verwendbaren Strahllänge (bei eingekoppelter Laserstrahlung). An den zylindrischen Teil **17** der Düsenkanalwand schliesst sich ein konischer Wandbereich **19** an. Dieser konische Teil **19** soll eventuelle Interaktionen des Flüssigkeitsstrahls mit eventuellen Gaswirbeln reduzieren. Dieser konische Teil **19** als Abschrägung sollte einen Winkel zwischen 90° und 150°, vorzugsweise zwischen 130° und 140° mit einer Längsachse des Düsenkanals **11** haben. Hier hat die Schräge **19** einen eine Herstellungstoleranz aufweisenden Winkel von 135 °.

Eine ideale Düse **1** wäre somit ein Loch in einer Wand mit einer Wandstärke e = 0. Eine derartige Düse würde aber dem Wasserdruck von einigen Atmosphären Druck nicht Stand halten. Es muss somit ein Kompromiss zwischen einer ausreichenden Festigkeit der Düse **1** und der stabilen Flüssigkeitsstrahllänge ℓₛ gefunden werden. Es wird deshalb die Verwendung der oben erwähnten Abschrägung **19** vorgeschlagen.

Die an den Düsenstein **1** anschliessende Innenwand **20** des Gehäuses **7** erweitert sich auf einen maximalen, kreisförmigen Innendurchmesser **21** und verjüngt sich dann als Innenwandteil **24** wieder konisch auf eine Gasauslassdüse **23** hin. Das Gehäuse **7** ist als Doppelkegel ausgebildet, wobei in der einen Kegelspitze die Flüssigkeitsdüse **1** (Düsenstein) und gegenüberliegend, also darunter, die Gasauslassdüse **23** angeordnet ist.

Am Ort des maximalen Innendurchmessers **21** ist mit gleichem radialen Abstand **r**_{**S**} vom Flüssigkeitsstrahl **5** bzw. von dessen Strahlachse wenigstens ein Gaseinlass für das Beaufschlagungsgas angeordnet. In dem hier gezeigten Beispiel sind vier Gaseinlässe 25a bis **25d** vorhanden. Der jeweilige Gaseinlass ist als zylindrisches Rohr **26a** bis **26d** ausgebildet. Jedes dieser Rohre **26a** bis **26d** mündet tangential an der Innenwandung **27** im

Bereich des maximalen Innendurchmessers **21** (d.h. im radialen Abstand **r**_{**S**}). Die Gasströmung aus jedem der Rohre **26a** bis **26d** strömt somit in einem ersten Strömungsteil **29** tangential gegen die Innenwandung **27** und wird beim Auftreffen auf die Innenwandung **27** in einen umlaufenden d.h. einen zweiten Strömungsteil **31** mit einer rotierenden Strömungskomponente umgelenkt.

Die Gasauslassdüse **23** ist derart angeordnet, dass sie mittig vom die Laserstrahlung führenden Flüssigkeitsstrahl **5** durchdrungen wird. Da ein Gasauslass nur durch diese Gasauslassdüse **23** möglich ist, wird die Strömung des Beaufschlagungsgases in einem dritten Strömungsteil **33** durch die Reibung mit dem Flüssigkeitsstrahl **5** nach unten gegen die Gasauslassdüse **23** unter einer Erhöhung der nach unten gerichteten Strömungskomponente abgelenkt. Der aus den Gehäuse **7** durch die Gasauslassdüse **23** austretende Flüssigkeitsstrahl **5** ist nun mit einem um den Flüssigkeitsstrahlmantel liegenden Beaufschlagungsgasstrom **35** weitgehend gegenüber der Umgebungsluft **36** abgeschirmt. Eine anfängliche Strömungsrotation im Bereich der vier Gaseinlassdüsen **25a** bis **25d** wird zunehmend durch die nach unten gerichtete Strömungskomponente überlagert und wird noch innerhalb des Gehäuses 7 weitgehend von dieser dominiert.

Wie in **Figur 2** dargestellt ist, bildet sich strömungsmässig nach der Lochkante **15** ein Zwischenraum **37** zwischen dem Mantel **39** des Flüssigkeitsstahls **5** und der zylindrischen Düsenkanalinnenwand **17.** Gemäss dem Effekt einer Wasserstrahlpumpe wird, wie durch den Pfeil **41** angedeutet, das Beaufschlagungsgas in den Zwischenraum **37** eingezogen und mit dem Flüssigkeitsstrahl **5** mitgerissen. Da nur wenig Beaufschlagungsgas in den Zwischenraum **37** eindringt, herrsch hier ein Unterdruck in einer Beaufschlagungsgasatmosphäre.

Zusammenfassend lässt sich zur Erzeugung einer langen stabilen Flüssigkeitsstrahllänge ℓₛ ausführen, dass
■ unmittelbar nach Bildung des Flüssigkeitsstrahls **5** sich dieser in einem Unterdruckbereich, aber in einer Beaufschlagungsgasatmosphäre befindet,
■ das Beaufschlagungsgas in einem möglichst grossen Abstand vom Flüssigkeitsstrahl in einer nicht auf diesen gerichteten Strömungsrichtung zugeführt wird,
■ dem Beaufschlagungsgas eine um den Flüssigkeitsstrahl rotierende Strömungskomponente sowie eine Strömungskomponente in Strömungsrichtung des Flüssigkeitsstrahls aufgeprägt wird, wobei beide Strömungskomponenten beschleunigend gegen den Flüssigkeitsstrahlmantel geführt werden,
■ der Flüssigkeitsstrahl **5** erst nachdem die Gasbeaufschlagung erfolgt ist durch die Mitte einer Gasauslassdüse **23** ins "Freie" tritt,
■ der Flüssigkeitsdüsenkanal möglichst kurz im Verhältnis zum Düssendurchmesser ausgebildet ist,
■ der Flüssigkeitsdüsenkanaleingang möglichst scharfkantig geformt ist.

Jedes dieser Merkmale trägt zur Verlängerung des stabilen Bereichs der Strahllängs ℓₛ bei. Hauptaugenmerk muss jedoch darauf gerichtet werden, dass
➢ der Flüssigkeitsstrahl durch eine, entfernt von der Flüssigkeitsdüse, einen Beaufschlagungsgasstrahl formende Gasauslassdüse derart hindurchgeführt wird, dass eine erste Achse des Flüssigkeitsstrahls und eine zweite Achse des gebildeten Gasstrahls bis auf eine Toleranz zusammenfallen
oder
➢ dass das Beaufschlagungsgas erst nach einem vorgegebenen Weg von der Flüssigkeitsdüse entfernt strömungsmässig nachgeschaltet zugeführt wird.

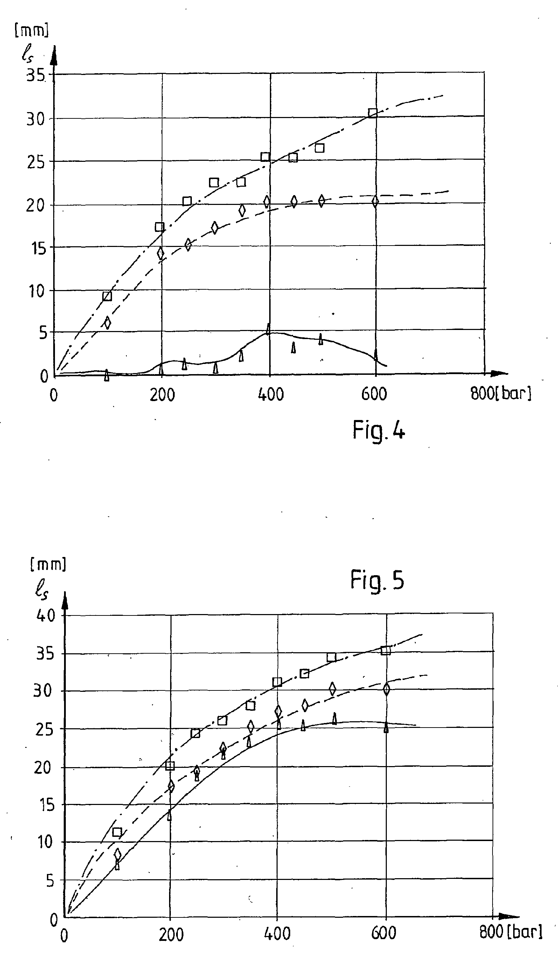

Zur experimentellen Veranschaulichung der obigen Ausführung zeigt das in **Figur 4** dargestellte Diagramm die stabile Strahllänge ℓₛ eines mit einem Düsenstein **1** erzeugten Wasserstrahls **5,** wobei der Düsenkanalquerschnitt des Düsensteins **1** 30 µm beträgt. Auf der Ordinate ist die stabile Strahllänge ℓₛ und auf der Abszisse der Flüssigkeitsdruck der Flüssigkeit unmittelbar vor dem Eintritt in den Düsenkanal **11** angegeben. Die strichpunktierte Messkurve mit den Messpunkten "■" gibt die jeweils maximale stabile Strahllänge ℓₛ und die gestrichelte Messkurve mit den Messpunkten "◆" gibt die jeweils minimale stabile Strahllänge ℓₛ an. Bei der durchgezogenen und bei der gestrichelten Messkurve hat der Flüssigkeitsstrahl einen freien Auslauf; d.h. erst in einem Abstand von einigen Zentimetern in der zerperlenden Strahllänge ℓ_{P} trifft die nun keinen Strahl mehr darstellende Flüssigkeit auf eine Oberfläche.

Die dritte, untere durchgezogene Messkurve mit den Messpunkten **"▲"** stellt die stabile Strahllänge eines auf eine Oberfläche auftreffenden Flüssigkeitsstrahles dar. Gegenüber den "freien" Flüssigkeitsstrahlen zeigt sich hier eine signifikante Verkürzung der stabilen Strahllänge ℓₛ. Es wird angenommen, dass diese signifikante Verkürzung von Impuls-Reflexionen auf der Oberfläche herrühren.

Wird nun eine Beaufschlagung des Flüssigkeitsstrahls mit Helium (dessen kinematische Gasviskosität kleiner als Luft ist) als Spülgas gemäss dem oben geschilderten Verfahren mit der obigen Vorrichtung vorgenommen, so ergibt sich, wie in **Figur 5** dargestellt ist, für die maximale und die minimale stabile Strahllänge ℓₛ (strichpunktierte und gestrichelte Kurve) eine geringfügige Erhöhung, jedoch für die stabile Strahllänge ℓₛ des auftreffenden und somit nicht frei endenden, also auftreffenden Flüssigkeitsstrahls eine signifikante Erhöhung.

Die Gasauslassdüse **23,** welche mittig vom Flüssigkeitsstrahl **5** durchströmt, kann nun wie in **Figur 1** dargestellt ist,direkt am Ende der konisch zusammenlaufenden Innenwandung **24** angeordnet werden, es kann aber auch noch ein kleiner kreiszylindrischer Wandteil vorgelagert werden.

Der Gaseinlass kann, wie in **Figur 1** dargestellt, in einer Ebene erfolgen, welche senkrecht vom Flüssigkeitsstrahl **5** durchstossen wird. Die Gaseinlassrohre **26a** bis **26d** können jedoch auch nach oben gegen die Flüssigkeitsdüse (Düsenstein) **1** oder nach unten gegen die Gasauslassdüse **23** gerichtet sein. Nach oben sollte kein grösserer Winkel als 30° und nach unten kein grösserer Winkel als 70° genommen werden.

Die Anzahl der Gaseinlässe ist nicht von grosser Bedeutung; es sollte jedoch immer darauf geachtet werden, dass ein gleichförmiger Einlass in einem möglichst grossen Abstand von Mantel des Flüssigkeitsstrahls **5** erfolgt.

Der oben beschriebene "tangentiale Gaseinlass" hat sich bewährt. Es können aber auch andere Einlasswinkel benützt werden. Es ist lediglich darauf zu achten, dass der Flüssigkeitsstrahl **5** nicht direkt getroffen und gestört wird.

## Patentansprüche

1. Verfahren zur Optimierung der Kohärenz eines mit einer Flüssigkeitsdüse **(1)** erzeugten Flüssigkeitsstrahls **(5)** als Strahlleiter für eine Bearbeitung eines Werkstücks **(3)** mit einem den Flüssigkeitsstrahl **(5)** mantelseitig umgebenden Beaufschlagungsgas **(35), dadurch gekennzeichnet, dass** der Flüssigkeitsstrahl **(5)** durch eine, entfernt von der Flüssigkeitsdüse **(1),** einen Beaufschlagungsgasstrahl formende Gasauslassdüse **(23)** derart hindurchgeführt wird, dass eine erste Achse des Flüssigkeitsstrahls **(5)** und eine zweite Achse des gebildeten Gasstrahls **(35)** bis auf eine Toleranz zusammenfallen.

2. Verfahren zur Optimierung der Kohärenz eines mit einer Flüssigkeitsdüse **(1)** erzeugten Flüssigkeitsstrahls **(5)** als Strahlleiter für eine Bearbeitung eines Werkstücks **(3)** mit einem den Flüssigkeitsstrahl **(5)** mantelseitig umgebenden Beaufschlagungsgas **(35),** insbesondere nach Anspruch 1, **dadurch gekennzeichnet, dass** das Beaufschlagungsgas erst nach einem vorgegebenen Weg von der Flüssigkeitsdüse **(1)** entfernt strömungsmässig nachgeschaltet zugeführt wird.

3. Verfahren nach Anspruch 1 oder 2, **dadurch gekennzeichnet, dass** eine Gasbeaufschlagung unmittelbar nach der Bildung des Flüssigkeitsstrahls **(5)** vorgenommen wird.

4. Verfahren nach einem der Ansprüche 1 bis 3, **dadurch gekennzeichnet, dass** als Beaufschlagungsgas ein Gas mit einer kinematischen Gasviskosität verwendet wird, welche kleiner ist als diejenige des Atmosphärengases.

5. Verfahren nach einem der Ansprüche 1 bis 4, **dadurch gekennzeichnet, dass** das Beaufschlagungsgas in einem ersten Strömungsbereich den Flüssigkeitsstrahl nicht treffend einströmt und in einem zweiten, an diesen ersten Strömungsbereich anschliessenden Strömungsbereich um den Flüssigkeitsstrahl **(5)** herum strömend umgelenkt wird, wobei der Übergang vom ersten in den zweiten Strömungsbereich in einem vorgegebenen radialen Abstand vom Flüssigkeitsstrahl erfolgt und vorzugsweise das Beaufschlagungsgas zur Erzeugung des ersten Strömungsbereichs an mehreren Orten, welche vorzugsweise ausgehend von der Flüssigkeitsachse gleiche Zentriwinkel haben, zugeführt wird.

6. Verfahren nach Anspruch 5, **dadurch gekennzeichnet, dass** dem Beaufschlagungsgas in einem dritten Strömungsbereich eine Strömungsrichtung gegen die Gasauslassdüse **(23)** aufgeprägt wird, wobei vorzugsweise diese Aufprägung derart erfolgt, dass im dritten Strömungsbereich ein in Ausströmrichtung des Flüssigkeitsstrahls **(5)** beschleunigender Beaufschlagungsgasstrom sich ergibt.

7. Vorrichtung **(7)** zur Optimierung der Kohärenz eines mit einer Flüssigkeitsdüse **(1)** erzeugten Flüssigkeitsstrahls **(5)** als Strahlleiter zur Bearbeitung eines Werkstücks **(3), gekennzeichnet durch** ein Gehäuse **(7)** mit wenigstens einem Gaseinlass **(25a-d)** und mit einer umlaufenden, die Flüssigkeitsdüse **(1)** aufnehmenden Wandung **(20, 24)** sowie mit einer von der Flüssigkeitsdüse **(1)** entfernt angeordneten Gasauslassdüse **(23); durch** die der Flüssigkeitsstrahl **(5)** derart hindurchführbar ist, dass eine erste Achse des Flüssigkeitsstrahls **(5)** und eine zweite Achse des **durch** die Gasauslassdüse **(23)** erzeugten Gasstrahls **(35)** bis auf eine Toleranz zusammenfallen.

8. Vorrichtung **(7)** zur Optimierung der Kohärenz eines mit einer Flüssigkeitsdüse **(1)** erzeugten Flüssigkeitsstrahls **(5)** als Strahlleiter zur Bearbeitung eines Werkstücks **(3),** insbesondere nach Anspruch 7, **gekennzeichnet durch** ein Gehäuse **(7)** mit einer umlaufenden, die Flüssigkeitsdüse **(1)** aufnehmenden Wandung **(20, 24)** und mit wenigstens einem Gaseinlass **(25a-d)** für das Beaufschlagungsgas, wobei der Gaseinlass der Flüssigkeitsdüse **(1)** strömungsmässig nachgeordnet angeordnet ist.

9. Vorrichtung **(7)** nach Anspruch 7 oder 8, **dadurch gekennzeichnet, dass** der wenigstens eine Gaseinlass **(25a-d)** eine Einströmrichtung in das Gehäuse **(7)** für das Beaufschlagungsgas definiert, die Wandung im Bereich des wenigstens einen Gaseinlasses **(25a-d)** einen kreisförmigen Querschnitt hat, und die Einströmrichtung, vorzugsweise tangential, auf diese Wandung den Flüssigkeitsstrahl nicht direkt beeinflussend trifft.

10. Vorrichtung **(7)** nach einem der Ansprüche 7 bis 9, **dadurch gekennzeichnet, dass** das Gehäuse **(7)** als Doppelkegel ausgebildet ist, wobei in der einen Kegelspitze die Flüssigkeitsdüse **(1)** angeordnet ist, und die andere Kegelspitze die Gasauslassdüse **(23)** hat, und der wenigstens eine Gaseinlass **(25a-d)** vorzugsweise in unmittelbarer Nähe des grössten Durchmessers des Doppelkegels angeordnet ist.

11. Flüssigkeitsdüse **(1)** einer Vorrichtung **(7)** nach einem der Ansprüche 7 bis 10 mit einem einen Flüssigkeitsstahl **(5)** erzeugenden Düsenkanal **(11), gekennzeichnet durch** einen scharfkantigen Übergang **(15)** von einer Düsenoberfläche **(13)** am Düseneingang in den Düsenkanal **(11),** wobei der scharfkantige Übergang **(15)** einen Radius kleiner 10 Mikrometer, vorzugsweise kleiner 2 Mikrometer hat.

12. Flüssigkeitsdüse **(1)** nach Anspruch 11, **dadurch gekennzeichnet, dass** die Länge **(e)** des Düsenkanals **(11)** kleiner ist als fünf Mal, vorzugsweise drei Mal, der Durchmesser des Düsenkanals **(d).**

13. Flüssigkeitsdüse **(1)** nach Anspruch 11 oder 12, **dadurch gekennzeichnet, dass** die Länge **(e)** des Düsenkanals **(11)** und damit die Dicke der Flüssigkeitsdüse **(1)** gerade so dick gewählt ist, dass die Düse **(1)** gerade dem auf ihr lastenden Flüssigkeitseingangsdruck standhält, wobei zur mechanischen Stabilitätsverstärkung ausgehend von einer zylindrischen Düsenkanalinnenwand **(17)** am Düsenkanalausgang eine kegelartig nach aussen verlaufende Abschrägung **(19)** der Düsenunterseite ausgebildet ist und die Abschrägung **(19)** unter einem Winkel zwischen 90 ° und 150°, vorzugsweise einem Winkel zwischen 130° und 140°, zu einer Längsachse des Düsenkanals **(11)** verlaufend ausgebildet ist.
